# EUROPÄISCHE PATENTANMELDUNG

(11) **EP 4 714 712 A1**
(43) Veröffentlichungstag der Anmeldung: **25.03.2026**
(21) Anmeldenummer: 24202057.6
(22) Anmeldetag: 23.09.2024
(51) Int. Cl.: B60K 35/10, B60K 35/21, B60K 35/25

(54) **SYSTEM ZUM AUSLÖSEN EINER FUNKTION IN EINEM FAHRZEUG DES ÖFFENTLICHEN PERSONENVERKEHRS**

(71) Anmelder: Hübner GmbH & Co. KG, 34123 Kassel (DE); Carl Zeiss Jena GmbH, 07745 Jena (DE)
(72) Erfinder: Hübsch, Daniel, 34277 Fuldabrück (DE); Brimo, Konrad Philipp, 40221 Düsseldorf (DE); Kühl, Siemen, 07745 Jena (DE)
(74) Vertreter: WSL Patentanwälte Partnerschaft mbB

(57) **Zusammenfassung**

Die vorliegende Erfindung betrifft System mit einem Wagenkasten für ein Fahrzeug des öffentlichen Personenverkehrs, einer holografischen Bedieneinrichtung, wobei die holografische Bedieneinrichtung folgende Elemente aufweist: eine Strahlungsquelle zum Erzeugen und Abstrahlen elektromagnetischer Strahlung; ein diffraktives Element, wobei das diffraktive Element derart ausgestaltet und angeordnet ist, dass in dem Betrieb des Systems die elektromagnetische Strahlung das diffraktive Element beleuchtet und dass das diffraktive Element in dem Betrieb des Systems bei einer Beleuchtung mit der elektromagnetischen Strahlung eine holographische Darstellung eines Bedienelements erzeugt; und eine Sensoreinrichtung, wobei die Sensoreinrichtung derart angeordnet und ausgestaltet ist, dass die Sensoreinrichtung in dem Betrieb des Systems eine Bewegung eines Objekts innerhalb eines die Darstellung des Bedienelements enthaltenden Detektionsvolumens berührungslos erfasst und bei dem Erfassen ein Betätigungssignal erzeugt und ausgibt, wobei die holographische Bedieneinrichtung derart an oder in dem Wagenkasten angeordnet ist, dass ein Objekt in oder vor dem Wagenkasten in das Detektionsvolumen bewegbar ist, und einer Steuereinrichtung wobei die Steuereinrichtung derart wirksam mit der Sensoreinrichtung verbunden ist, dass die Steuerreinrichtung in dem Betrieb des Systems das Betätigungssignal von der Sensoreinrichtung empfängt, und wobei die Steuerreinrichtung derart eingerichtet ist, dass die Steuereinrichtung als Reaktion auf das Betätigungssignal ein Funktionssteuersignal erzeugt und ausgibt, wobei mit dem Funktionssteuersignal eine Funktion des Fahrzeugs auslösbar ist.

## Beschreibung

Die vorliegende Erfindung betrifft ein System zum Auslösen einer Funktion in einem Fahrzeug des öffentlichen Personenverkehrs.

In Fahrzeugen des öffentlichen Personennah- und Fernverkehrs, beispielsweise in Zügen, Straßenbahnen, Bussen und Seilbahnen, stehen den Passagieren eine Reihe von Funktionen der Fahrzeuge zur Verfügung, die diese durch Betätigen eines Bedienelements, beispielsweise eines Knopfs oder Schalters, auslösen können.

Ein typisches Beispiel dafür ist die Taste zum Öffnen der Tür eines Eisenbahnwagens.

Das tausendfache mechanische Auslösen eines derartigen Bedienelementes durch eine Vielzahl von unterschiedlichen Personen führt zu hygienischen Problemen. Zudem unterliegen mechanische Bedienelemente mit bewegten Elementen auch einem Verschleiß. Dieser kann zu Funktionsausfällen führen, erfordert zumindest aber eine regelmäßige Wartung oder einen Austausch der Bedienelemente. Die immer häufiger verwendeten Displays mit Touchfunktion oder kapazitiven Schaltelemente, die keine bewegten Elemente mehr erfordern, sondern nur eine Berührung, unterliegen den gleichen hygienischen Problemen wie mechanische Bedienelemente und erweisen sich als wartungsintensiver als zunächst anzunehmen.

Daher ist es Aufgabe der vorliegenden Erfindung, ein System mit einem Wagenkasten für ein Fahrzeug des öffentlichen Personenverkehrs und einem Bedienelement bereitzustellen, welches zumindest einen der zuvor genannten Nachteile vermeidet.

Die zuvor genannte Aufgabe wird erfindungsgemäß mit einem System gemäß dem unabhängigen Anspruch 1 gelöst. Dazu umfasst das erfindungsgemäße System einen Wagenkasten für ein Fahrzeug des öffentlichen Personenverkehrs, eine holografische Bedieneinrichtung sowie eine Steuereinrichtung. Die holografische Bedieneinrichtung stellt zwei wesentliche Funktionen zur Verfügung. Zum einen generiert die holographische Bedieneinrichtung eine, vorzugsweise dreidimensionale, holografische Darstellung eines Bedienelements, zum anderen erfasst die holografische Bedieneinrichtung ein virtuelles Betätigen des dargestellten Bedienelements durch einen Passagier.

Daher umfasst die holographische Bedieneinrichtung gemäß der vorliegenden Erfindung eine Strahlungsquelle zum Erzeugen und Abstrahlen elektromagnetischer Strahlung, ein diffraktives Element, wobei das diffraktive Element so ausgestaltet und angeordnet ist, dass in dem Betrieb des Systems die elektromagnetische Strahlung das diffraktive Element beleuchtet und das diffraktive Element in dem Betrieb des Systems bei einer Beleuchtung mit der elektromagnetischen Strahlung eine, vorzugsweise dreidimensionale, holografische Darstellung des Bedienelements erzeugt. Die holografische Bedieneinrichtung umfasst ferner eine Sensoreinrichtung, wobei die Sensoreinrichtung derart angeordnet und ausgestaltet ist, dass die Sensoreinrichtung in dem Betrieb des Systems eine Bewegung eines Objekts innerhalb eines die Darstellung des Bedienelements enthaltenden Detektionsvolumens berührungslos erfasst und bei dem Erfassen ein Betätigungssignal erzeugt und ausgibt.

Damit ein Betätigen des holografisch dargestellten Bedienelements möglich ist, ist die holographische Bedieneinrichtung derart an oder in dem Wagenkasten angeordnet, dass ein Objekt, insbesondere ein Körperteil eines Passagiers, im Wagenkasten in das Detektionsvolumen bewegbar ist.

Schließlich umfasst das System erfindungsgemäß auch eine Steuereinrichtung, wobei die Steuereinrichtung derart wirksam mit der Sensoreinrichtung verbunden ist, dass die Steuereinrichtung in dem Betrieb des Systems das Betätigungssignal von der Sensoreinrichtung empfängt. Die Steuereinrichtung ist derart eingerichtet, dass die Steuereinrichtung als Reaktion auf das Betätigungssignal ein Funktionssteuersignal erzeugt und ausgibt, wobei mit dem Funktionssteuersignal eine Funktion des Fahrzeugs auslösbar ist.

Die der vorliegenden Erfindung zugrunde liegende Idee ist es, ein Bedienelement zum Auslösen einer Funktion in einem Fahrzeug des öffentlichen Personenverkehrs für ein vollständig berührungsloses Betätigen auszugestalten.

Der Wagenkasten des Systems ist in einer Ausführungsform der Erfindung ein Wagenkasten eines Busses oder eines Busanhängers, ein Wagenkasten eines Straßenbahnwaggons, ein Wagenkasten eines Eisenbahnwaggons, ein Wagenkasten einer U-Bahn oder ein Wagenkasten einer Bergbahn, oder ein Wagenkasten eines Schlafwagens.

Bedienelemente im Sinne der vorliegenden Anmeldung sind alle Elemente, die geeignet sind, durch ihre Betätigung eine Funktion auszulösen. Beispiele hierfür sind eine Taste, ein Knopf, eine verschwenkbare Wippe wie ein Kippschalter, ein drehbarer Regler oder ein Schieberegler, ein Hebel, ein Joystick, ein Scrollrad. Auch nicht typischerweise mit der Hand bedienbare Bedienelemente wie ein Fußpedal, eine Trittplatte oder ein Kniehebel sind Bedienelemente im Sinne der vorliegenden Anmeldung.

Holografische Bedieneinrichtungen sind aus dem Stand der Technik in einer Reihe von Ausführungsformen bekannt. Alle diese holografischen Bedieneinrichtungen sind grundsätzlich für die Realisierung der vorliegenden Erfindung geeignet.

In einer Ausführungsform bildet eine bildgebende Einheit ein Bild auf das diffraktive Element, welches als Mattscheibe fungiert, ab . In einer solchen Ausführungsform bildet die bildgebende Einheit die Strahlungsquelle. Das diffraktive Element fungiert als holographischer Diffusor.

Alternativ ist das diffraktive Element als Linsen- oder Spiegelelement ausgebildet. Ein abbildendes System, welches ein solches diffraktives Element umfasst, kann dann das Bild einer bildgebenden Einheit vergrößert in einem definierten Abstand abbilden. In einer Ausführungsform könnte als bildgebendes Element ein SLM (spatial light modulator) genutzt werden, der selbst bereits ein dreidimensionales Bild erzeugen kann.

In einer alternativen Ausführungsform jedoch ist die Information über das darzustellende Bedienelement in dem diffraktiven Element codiert bzw. gespeichert und die elektromagnetische Strahlung dient dem Auslesen der in der Ausgestaltung des diffraktiven Elements gespeicherten Gestaltung und dem Umsetzen in ein Hologramm. In einer solchen Ausführungsform ist die Strahlungsquelle eine Leuchtdiode oder ein Laser.

In einer Ausführungsform der Erfindung umfasst die Strahlungsquelle ein Display, eine Leuchtdiode oder einen Laser, vorzugsweise eine Laserdiode.

Während in einer Ausführungsform der Erfindung die Strahlungsquelle und das diffraktive Element separate Untereinheiten der holografischen Bedieneinrichtung bilden und die Sensoreinrichtung eine weitere Untereinheit der holografischen Bedieneinrichtung bildet, sind in einer Ausführungsform der Erfindung die Strahlungsquelle, das diffraktive Element und die Sensoreinrichtung integriert, so wie dies beispielsweise in der deutschen Patentanmeldung DE 10 2021 210 915 A1 der Fa. Carl Zeiss Jena offenbart wird.

Insbesondere ist in einer Ausführungsform der Erfindung das diffraktive Element eine Lichtleiterstruktur, die es ermöglicht, die holografische Bedieneinrichtung platzsparend zu implementieren.

Entscheidend für die Funktion der Sensoreinrichtung ist, dass sie in der Lage ist, eine Bewegung eines Objekts, d.h. insbesondere eines Körperteils eines Passagiers, in dem Detektionsvolumen berührungslos zu erfassen.

Daher umfasst die Sensoreinrichtung in einer Ausführungsform einen Sensor, der ausgewählt ist aus einer Gruppe bestehend aus einem Infrarotsensor, einem kapazitiven Sensor, einer Kamera, einem optischen Sensor, einem Ultraschallsensor, eine Lichtschranke und einen Abstandssensor oder einer Kombination davon. Die genannten Sensoren sind in der Lage, die Bewegung eines Objekts, d.h. insbesondere eines Körperteils eines Passagiers, berührungslos zu erfassen. In einer Ausführungsform der Erfindung ist der Sensor ein Abstandssensor. Solche Abstandssensoren sind sowohl mit Ultraschall als auch mit elektromagnetischer Strahlung realisierbar.

In einer Ausführungsform der Erfindung ist das Detektionsvolumen identisch mit dem von der holografischen Darstellung des Bedienelements ausgefüllten Volumen. In einer anderen Ausführungsform jedoch ist das Detektionsvolumen größer als das von der holografischen Darstellung des Bedienelements ausgefüllte Volumen, wobei nicht notwendigerweise das gesamte Detektionsvolumen zum Erfassen der Bewegung des Objekts sensitiv ist. In einer Ausführungsform der Erfindung kann der sensitive Bereich das Detektionsvolumen auch vollständig außerhalb des von der holografischen Darstellung des Bedienelements gefüllten Volumens liegen. Beispielsweise kann der sensitive Bereich des Detektionsvolumens die holografische Darstellung des Bedienelements nach Art eines optischen Vorhangs einschließen oder umschließen. In einer Ausführungsform der Erfindung hat die Grenze des Detektionsvolumens einen Abstand von höchstens 10 cm, vorzugsweise von höchstens 5 cm und besonders bevorzugt von höchstens 3 cm von dem Volumen, das mit der holografischen Darstellung des Bedienelements ausgefüllt ist.

Die Steuereinrichtung des Systems ist in einer Ausführungsform der Erfindung ein Rechner mit einem Prozessor. Die Steuereinrichtung übernimmt in einer Ausführungsform ausschließlich Steuer- und Auswertefunktionen für die holografische Bedieneinrichtung, während sie über eine Schnittstelle zum Ausgeben des Funktionssteuersignals an eine übergeordnete Steuerung des Wagens oder des Fahrzeugs verfügt. In einer alternativen Ausführungsform ist die Steuereinrichtung Teil einer Steuerung des Wagens, der auf dem Wagenkasten aufbaut oder des Fahrzeugs, dessen Teil der Wagenkasten des Systems ist. Auch ist es möglich, die Steuereinrichtung mit ihren jeweiligen Funktionen verteilt, d.h. in mehreren Rechnern, zu implementieren.

Von herkömmlichen Bedienelementen, beispielsweise mechanisch betätigbaren Tasten oder Knöpfen, sind es die Passagiere gewohnt, eine Rückmeldung oder ein Feedback zu erhalten. Das Drücken einer Taste beispielsweise ist vom Passagier haptisch als Bewegung der Taste mit einem klaren Beginn und einem Ende wahrnehmbar. Bei der erfindungsgemäß eingesetzten holographischen Bedieneinrichtung ist dies zunächst einmal nicht der Fall, da das Betätigen vollständig berührungslos erfolgt.

Daher weist das System in einer Ausführungsform eine Signalisiereinrichtung auf, wobei die Signalisiereinrichtung derart eingerichtet und angeordnet ist, dass die Signalisiereinrichtung in dem Betrieb des Systems ein für den Passagier sensorisch wahrnehmbares Signal erzeugt. Dabei ist das Signal in einer Ausführungsform ein berührungslos sensorisch wahrnehmbares Signal.

Ein solches sensorisch wahrnehmbares Signal ist in einer Ausführungsform die erwähnte Rückmeldung/Feedback. In einer Ausführungsform der Erfindung ist das sensorisch wahrnehmbare Signal eine Markierung, die es dem Passagier beispielsweise ermöglicht, mit seinem Körperteil zu erfassen, dass er sein Körperteil in einer richtigen Position für das Betätigen des Bedienelements angeordnet hat.

In einer Ausführungsform der Erfindung ist das Signal ein visuelles Signal, ein haptisches Signal oder ein thermisches Signal. Ein visuelles Signal kann beispielsweise eine Farbe bzw. Farbänderung einer Beleuchtung und/oder eine Intensitätsänderung einer Beleuchtung sein. Ein haptisches Signal lässt sich berührungslos mithilfe von Ultraschall oder auch mit einem Luftstrom erzeugen. Ein thermisches Signal ist in einer Ausführungsform eine für den Passagier wahrnehmbare Temperaturänderung.

Grundsätzlich ist es möglich, das sensorisch wahrnehmbare Signal an irgendeiner Position in der Umgebung der holographischen Darstellung des Bedienelements zu erzeugen. In einer Ausführungsform der Erfindung wird jedoch das sensorisch wahrnehmbare Signal in dem Detektionsvolumen erzeugt. Auf diese Weise kann der Passagier beispielsweise bei dem Betätigen des Bedienelements eine Rückmeldung an oder auf seiner Hand erhalten, so wie er es von herkömmlichen, beispielsweise mechanisch betätigten Bedienelementen gewohnt ist.

In einer Ausführungsform der Erfindung ist die Einrichtung eine Ultraschalleinrichtung, wobei die Ultraschalleinrichtung derart eingerichtet und angeordnet ist, dass die Ultraschalleinrichtung in dem Betrieb des Systems, vorzugsweise in dem Detektionsvolumen, ein an einem Körperteil des Passagiers wahrnehmbares haptisches Signal erzeugt.

In einer Ausführungsform der Erfindung ist die Ultraschalleinrichtung derart wirksam mit der Steuereinrichtung verbunden, dass die Ultraschalleinrichtung in dem Betrieb des Systems ein Ultraschallsteuersignal von der Steuereinrichtung empfängt, wobei die Steuereinrichtung derart eingerichtet ist, dass die Steuereinrichtung in dem Betrieb des Systems als Reaktion auf das Betätigungssignal das Ultraschallsteuersignal erzeugt und an die Ultraschalleinrichtung ausgibt, und wobei die Ultraschalleinrichtung derart eingerichtet und angeordnet ist, dass die Ultraschalleinrichtung in dem Betrieb des Systems als Reaktion auf das Ultraschallsteuersignal das haptische Signal erzeugt.

Eine solche Ausführungsform erzeugt als Folge des Betätigens des virtuellen Bedienelements eine Rückmeldung an den Passagier in etwa an dem Ort, an dem sich auch die holografische Darstellung des Bedienelements befindet.

Ultraschall kann verwendet werden, um haptische Eindrücke in der Luft zu erzeugen, indem Schallwellen im Ultraschallbereich (beispielsweise in einem Frequenzbereich zwischen 20 kHz und 100 kHz) gezielt moduliert und fokussiert werden. Dieses Prinzip wird in sogenannten "haptischen Ultraschall-Displays" bereits genutzt, um eine fühlbare Berührung ohne physischen Kontakt zu erzeugen.

Dabei sind in einer Ausführungsform folgende Schritte umzusetzen: Mehrere Ultraschallwandler (Transducer) arbeiten zusammen, um Ultraschallwellen zu erzeugen, die in einem bestimmten Bereich im Raum fokussiert werden. Der Punkt, an dem die Wellen aufeinandertreffen, erzeugt eine Zone mit hoher Schallintensität, was zu einem Druckunterschied in der Luft führt. Dieser Druckunterschied ist stark genug, um von den menschlichen Nervenenden in der Haut als Berührung oder Vibration wahrgenommen zu werden. Der Fokus kann gezielt im Raum positioniert und bewegt werden, sodass der Passagier das Gefühl hat, etwas zu berühren oder eine Vibration zu spüren, obwohl sich dort physisch nichts befindet. Durch die Modulation der Schallwellenfrequenz und Intensität können unterschiedliche haptische Effekte erzeugt werden. Beispielsweise können verschiedene Texturen oder Formen simuliert werden, indem die Ultraschallwellen variabel fokussiert und moduliert werden. Indem die Position der Foki im Raum verändert wird, können diese taktilen Empfindungen in einer bestimmten Entfernung zur Ultraschallquelle "projiziert" werden, was den Eindruck vermittelt, dass man mit einer unsichtbaren Oberfläche interagiert.

Eine holographische Bedieneinrichtung weist anders als dies bei herkömmlichen, insbesondere mechanisch betätigten, Bedienelementen der Fall ist, den Vorteil auf, dass sich mit einer einzigen holographischen Bedieneinrichtung verschiedene Bedienelemente zeitlich nacheinander in etwa am gleichen Ort darstellen zu lassen.

In einer Ausführungsform der Erfindung sind in dem diffraktiven Element die Gestaltung des Bedienelements und die Gestaltung eines zweiten Elements codiert, wobei das Bedienelement von dem zweiten Element verschieden ist. Durch einen Wechsel des Wellenlängenbereichs der das diffraktive Element beleuchtenden elektromagnetischen Strahlung lässt sich selektiv entweder das Bedienelement oder das zweite Element oder in einer Ausführungsform auch eine Überlagerung der beiden gleichzeitig darstellen.

Daher ist in einer Ausführungsform der Erfindung die Strahlungsquelle derart wirksam mit der Steuereinrichtung verbunden, dass die Strahlungsquelle in den Betrieb des Systems ein Quellensteuersignal von der Steuereinrichtung empfängt, wobei die Strahlungsquelle derart eingerichtet ist, dass sie in Abhängigkeit von dem Quellensteuersignal auswählbar entweder die elektromagnetische Strahlung in einem ersten Wellenlängenbereich erzeugt und abstrahlt oder die elektromagnetische Strahlung in einem zweiten Wellenlängenbereich erzeugt und abstrahlt und wobei das diffraktive Element derart ausgestaltet ist, dass es bei Beleuchtung mit der elektromagnetischen Strahlung in dem ersten Wellenlängenbereich die, vorzugsweise dreidimensionale, holographische Darstellung des ersten Bedienelements erzeugt und bei Beleuchtung mit der elektromagnetischen Strahlung in dem zweiten Wellenlängenbereich eine, vorzugsweise dreidimensionale, holographische Darstellung eines zweiten Elements erzeugt, wobei das erste Bedienelement von dem zweiten Element verschieden ist.

Dabei ist es möglich, dass das zweite Element lediglich eine Markierung ist, ohne dass damit die Möglichkeit zum Betätigen eines Bedienelements verbunden wäre. Ein Beispiel für eine solche Markierung ist ein Symbol. Beispielsweise kann ein Pfeil angezeigt werden, sollte eine Ausstiegstür blockiert sein, sodass die Passagiere zu der nächstgelegenen Tür geleitet werden.

In einer Ausführungsform jedoch ist das zweite Element ein zweites Bedienelement, das von dem ersten Bedienelement verschieden ist.

Anstatt in dem diffraktiven Element das Bedienelement und ein zweites, von den Bedienelement verschiedenes Element zu codieren, ist in einer Ausführungsform der Erfindung in dem diffraktiven Element eine, vorzugsweise dreidimensionale, holographische Darstellung des Bedienelements an einer ersten Position und eine, vorzugsweise dreidimensionale, holographische Darstellung des Bedienelements an einer zweiten Position codiert, wobei in Abhängigkeit von der Wellenlänge der elektromagnetischen Strahlung das Bedienelement entweder an der ersten oder an der zweiten Position dargestellt wird.

Daher ist in einer Ausführungsform der Erfindung die Strahlungsquelle derart wirksam mit der Steuereinrichtung verbunden, dass die Strahlungsquelle in dem Betrieb des Systems ein Quellensteuersignal von der Steuereinrichtung empfängt, wobei die Strahlungsquelle derart eingerichtet ist, dass sie in Abhängigkeit von dem Quellensteuersignal auswählbar entweder die elektromagnetische Strahlung in einem ersten Wellenlängenbereich erzeugt und abstrahlt oder die elektromagnetische Strahlung in einem zweiten Wellenlängenbereich erzeugt und abstrahlt, und wobei das diffraktive Element derart ausgestaltet ist, dass es bei Beleuchtung mit der elektromagnetischen Strahlung in dem ersten Wellenlängenbereich eine, vorzugsweise dreidimensionale, holographische Darstellung des Bedienelements an einer ersten Position erzeugt und bei Beleuchtung mit der elektromagnetischen Strahlung in dem zweiten Wellenlängenbereich eine, vorzugsweise dreidimensionale, holografische Darstellung des Bedienelements an einer zweiten Position erzeugt, wobei die erste Position von der zweiten Position verschieden ist.

Auf diese Weise lässt sich beispielsweise eine zu drückende Taste als Bedienelement einmal im Ruhezustand und einmal im gedrückten Zustand darstellen.

Auch ein solcher Wechsel der holographischen Darstellung kann als Rückkopplung/Feedback für den Bediener verwendet werden.

In Abhängigkeit von der durch das Bedienelement auszulösenden Funktion werden auf dem Gebiet des öffentlichen Personenverkehrs erhöhte Sicherheitsanforderungen an die Bedienelemente gestellt. Beispielsweise darf sich die Tür eines Eisenbahnwaggons nicht öffnen lassen, solange sich der Zug in Fahrt befindet.

Daher weist in einer Ausführungsform der Erfindung die Steuereinrichtung eine Sicherheitseinrichtung auf, wobei die Sicherheitseinrichtung derart eingerichtet ist, dass die Sicherheitseinrichtung in dem Betrieb des Systems ein Erzeugen des Funktionssteuersignals nur dann zulässt, wenn die Sicherheitseinrichtung ein Freigabesignal von einer Steuerung des Fahrzeugs empfangen hat. Das Freigabesignal kann beispielsweise das Signal sein, dass der Triebfahrzeugführer erzeugt, wenn der Zug zum Stillstand gekommen ist.

Darüber hinaus bringt eine holografische Bedieneinrichtung, so wie sie in dem erfindungsgemäßen System eingesetzt wird, die Möglichkeit mit sich, dass ein Passagier das holografisch dargestellte Bedienelement völlig unbeabsichtigt betätigt. Eine solche Betätigung könnte beispielsweise durch ein Gepäckstück erfolgen, das unbeabsichtigt in das Detektionsvolumen eingebracht wird.

Daher weist das System in einer Ausführungsform eine Funktionssicherungseinrichtung auf, wobei die Funktionssicherungseinrichtung derart eingerichtet und angeordnet ist, dass die Funktionssicherungseinrichtung in dem Betrieb des Systems ein Maß dafür erfasst, ob dem Erzeugen des Betätigungssignals eine bewusste Handlung eines Passagiers zugrunde liegt, und dann, wenn das Maß gleich oder größer ist als ein Schwellenwert, ein Funktionssicherungssignal erzeugt und ausgibt. Dabei ist die Steuereinrichtung derart wirksam mit der Funktionssicherungseinrichtung verbunden, dass die Steuereinrichtung in dem Betrieb des Systems das Funktionssicherungssignal von der Funktionssicherungseinrichtung empfängt, und die Steuereinrichtung ist derart eingerichtet, dass die Steuereinrichtung das Funktionssteuersignal nur dann erzeugt und ausgibt, wenn sie das Funktionssicherungssignal empfangen hat.

Die Prüfung der Frage, ob das Betätigen des Elements willentlich erfolgt ist, kann auf ganz unterschiedliche Weisen erfolgen. In einer Ausführungsform der Erfindung erfasst die Funktionssicherungseinrichtung, wie lange das Bedienelement betätigt wurde. Übersteigt die Dauer der Betätigung einen Schwellenwert, so ist davon auszugehen, dass das Betätigen des Bedienelements absichtlich erfolgte. Erst dann erzeugt die Funktionssicherungseinrichtung das Funktionssicherungssignal und die Steuereinrichtung wiederum erzeugt das Funktionssteuersignal.

Eine Funktionssicherung lässt sich jedoch auch mit der Sensoreinrichtung der holographischen Bedieneinrichtung selbst bereitstellen. Beispielsweise kann die Sensoreinrichtung nicht nur die Bewegung als solche, sondern in einer Ausführungsform der Erfindung auch eine Bewegungsrichtung oder ein bestimmtes Bewegungsmuster erfassen und in Abhängigkeit von einer Übereinstimmung dieser Richtung oder diesem Muster mit einem Sollwert erzeugt die Funktionssicherungseinrichtung das Funktionssteuersignal oder nicht.

In einer Ausführungsform jedoch umfasst die Funktionssicherungseinrichtung einen Bewegungssensor zusätzlich zu der Sensoreinrichtung. Dabei ist der Bewegungssensor derart angeordnet, dass der Bewegungssensor erfasst, ob die von der Sensoreinrichtung erfasste Bewegung eine bewusste Bewegung eines Passagiers ist oder nicht.

Wie zuvor für die Sensoreinrichtung beschrieben, kann auch der Bewegungssensor eine Richtung der Bewegung oder ein Bewegungsmuster erfassen.

In einer Ausführungsform der Erfindung ist der Bewegungssensor ausgewählt aus einer Gruppe bestehend aus einem Infrarotsensor, einem kapazitiven Sensor, einer Kamera, einem optischen Sensor, einem Ultraschallsensor, einer Lichtschranke und einem Abstandssensor oder einer Kombination davon.

In einer Ausführungsform der Erfindung umfasst die Funktionssicherungseinrichtung eine Lageerkennungseinrichtung, wobei die Lageerkennungseinrichtung derart angeordnet und eingerichtet ist, dass sie eine Lage (Position und Orientierung) eines Passagiers erfasst, und wobei die Funktionssicherungseinrichtung derart eingerichtet ist, dass sie das Funktionssicherungssignal nur dann erzeugt, wenn die erfasste Lage des Passagiers gleich einer vorgegebenen Soll-Lage ist. Ein Beispiel für eine solche Realisierung ist die Erfassung, ob der Passagier seinen Kopf und/oder seinen Blick der Darstellung des Bedienelements zugewandt hat.

Realisiert man die holografische Darstellung des Bedienelements mit einem diffraktiven Element, das diese Darstellung codiert enthält, so sind die Varianten von unterschiedlichen Elementen, die zeitlich nacheinander oder auch teilweise gleichzeitig dargestellt werden können, zahlenmäßig beschränkt. Daher weist das System in einer Ausführungsform der Erfindung zusätzlich eine Projektionseinrichtung auf, wobei die Projektionseinrichtung derart eingerichtet und angeordnet ist, dass die Projektionseinrichtung in dem Betrieb des Systems eine zweidimensionale graphische Darstellung auf eine Fläche in der Umgebung der grafischen Darstellung des Bedienelements projiziert. Mit einer solchen herkömmlichen Projektion lassen sich Informationen aller Art einblenden, die sich in der holografischen Darstellung des Bedienelements nicht generieren lassen.

In einer Ausführungsform der Erfindung ist die Funktion des Fahrzeugs ausgewählt aus einer Gruppe bestehend aus einer Türöffnung, einer Türschließung, einem Notruf, einem Aufbau einer Kommunikationsverbindung, beispielsweise zum Triebfahrzeugführer, einem Haltewunsch, einer Klimaanlage, einer Beleuchtung, einem Informationssystem, einem Service-Wunsch oder einer Kombination davon.

Darüber hinaus wird zumindest eine der zuvor genannten Aufgaben auch durch einen Wagen eines Fahrzeugs des öffentlichen Personenverkehrs mit einem System, so wie es in den Ausführungsformen davon zuvor beschrieben wurde, gelöst.

Ferner wird zumindest eine der zuvor genannten Aufgaben auch durch ein Fahrzeug des öffentlichen Personenverkehrs mit einem System, so wie es in den Ausführungsformen davon zuvor beschrieben wurde, gelöst.

In einer Ausführungsform der Erfindung umfasst der Wagen oder das Fahrzeug eine Türöffnung mit einer Tür, wobei die Funktion, die das Funktionssteuersignal auslöst, eine Türöffnung oder eine Türschließung ist.

Weitere Vorteile, Merkmale und Anwendungsmöglichkeiten der vorliegenden Erfindung werden anhand der folgenden Beschreibung einer Ausführungsform und der dazugehörigen Figuren deutlich. Dabei sind gleiche Elemente mit identischen Bezugszeichen bezeichnet.
- Figur 1: ist eine schematische Seitenansicht eines Eisenbahnwagons, in dem das erfindungsgemäße System implementiert ist.
- Figur 2: ist eine schematisches einer Ausführungsform des erfindungsgemäßen Systems.

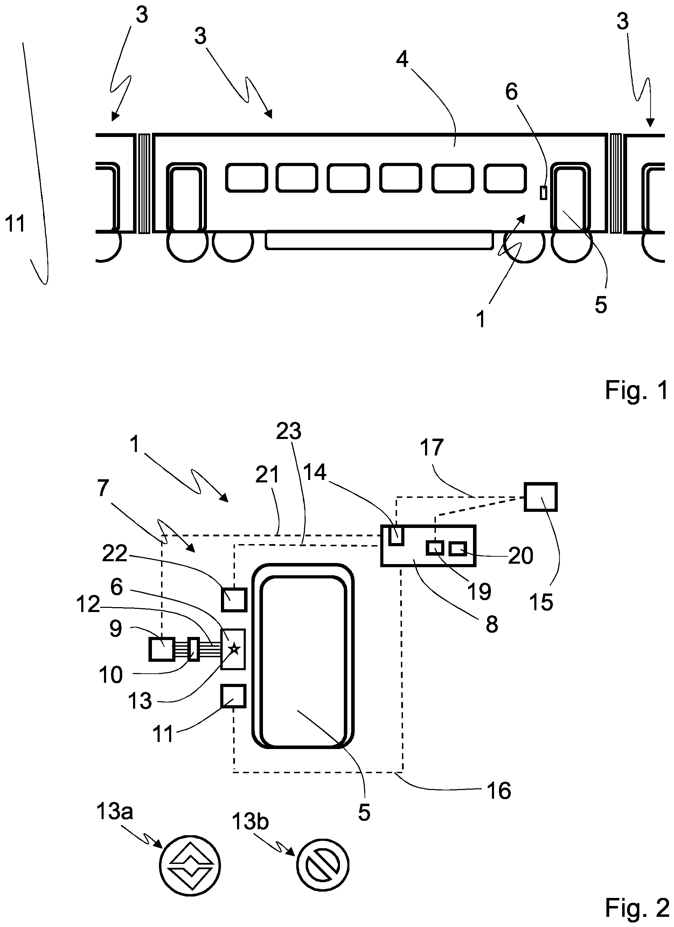

Die Fig. 1 und 2 gemeinsam veranschaulichen eine Implementierung des erfindungsgemäßen Systems 1 als Bestandteil eines Personenzuges 2 als Fahrzeug des öffentlichen Personenverkehrs im Sinne der vorliegenden Anmeldung.

Fig. 1 zeigt schematisch die Seitenansicht des Zuges 2 bestehend aus einer Mehrzahl von Eisenbahnwaggons 3, deren Wagenkästen 4 jeweils Bestandteil des erfindungsgemäßen Systems 1 sind. In der hier beispielhaft beschriebenen Variante dient das System 1 dazu, die Tür 5 des Waggons 3 von einem Passagier ausgelöst zu öffnen.

Anstelle des sonst üblichen, durch mechanischen Druck, typischerweise mit der Hand des Passagiers, zu betätigenden Knopfes ist für den Passagier auf der Außenfläche des Waggons 3 von außen nur eine aufgedruckte Markierung 6 erkennbar. Diese Markierung 6 dient dazu, den Passagieren anzuzeigen, an welcher Position eine holografische Bedieneinrichtung vorgesehen ist, sodass dort statt des mechanischen Knopfs als Bedienelement eine dreidimensionale holografische Darstellung dieses Knopfes erzeugt wird.

Fig. 2 zeigt eine schematische Darstellung des gesamten Systems 1, wobei nur die Tür 5 in der Türöffnung im Wagenkasten 4 angedeutet ist. Die holografische Bedieneinrichtung 7 umfasst drei wesentliche Komponenten, nämlich eine Strahlungsquelle 9, ein diffraktives Element 10 und eine Sensoreinrichtung 11. In der beschriebenen Variante ist das diffraktive Element 10 eine Beugungsstruktur, in welche die Information der Gestaltung der dreidimensionalen holografischen Darstellung des Bedienelements 13a fest eingeschrieben, d.h. dort codiert ist. Wird das diffraktive Element 10 mit der von der Strahlungsquelle 9 erzeugten elektromagnetischen Strahlung 12 beleuchtet, so generiert das diffraktive Element 10 eine dreidimensionale holografische Darstellung 13 vor der Markierung 6. Dabei wird holografisch ein Knopf 13a (siehe Inset unten in Fig. 2) als Bedienelement dargestellt.

Um ein Betätigen dieses virtuellen, dreidimensionalen holografisch dargestellten Knopfes 13a zu ermöglichen, umfasst die Sensoreinrichtung 11 einen optischen Abstandssensor. Dieser erfasst eine Bewegung eines beliebigen Objekts, insbesondere aber der Hand eines Passagiers, in dem von der Darstellung 13a des Knopfes ausgefüllten Volumenbereich. In der dargestellten Ausführungsform ist daher das Detektionsvolumen identisch mit dem von der dreidimensionalen holografische Darstellung 13 ausgefüllten Volumenbereich.

Das System 1 verfügt zudem über eine Steuereinrichtung 8. Diese Steuereinrichtung 8 ist in der dargestellten Variant ein Rechner, der ausschließlich die Funktionen der holografischen Bedieneinrichtung 7 steuert. Über eine Schnittstelle 14 ist die Steuereinrichtung 8 mit einer zentralen Wagensteuerung 15 verbunden. Die zentrale Wagensteuerung 15 wiederum ist in ein Netzwerk des Zuges 2 eingebunden und Teil der Zugsteuerung (nicht dargestellt).

In der gezeigten Variante ist die Steuereinrichtung 8 mit der Sensoreinrichtung 11 verbunden, sodass in dem Betrieb des Systems 1 die Steuereinrichtung 8 ein Betätigungssignal 16 von der Sensoreinrichtung 11 empfangen kann. Dieses Betätigungssignal 16 generiert die Sensoreinrichtung 11, wenn sie die Anwesenheit einer Hand im Detektionsvolumen erfasst. Als Reaktion auf den Empfang des Betätigungssignals 16 generiert die Steuereinrichtung 8 ein Funktionssteuersignal 17 und gibt dieses an die zentrale Wagensteuerung 15 aus. Letztere wiederum veranlasst durch das Funktionssteuersignal 17 ausgelöst das Öffnen der Tür.

Allerdings sind zwei mögliche Fehlfunktionen denkbar, die es durch eine Ausgestaltung des Systems 1 auszuschließen gilt, um die notwendige Sicherheit des Personenverkehrs zu gewährleisten.

Zum einen darf die Tür 5 des Wagens 3 nicht während der Fahrt geöffnet werden. Daher verfügt die Steuereinrichtung 8 über eine Sicherheitseinrichtung 19. Diese Sicherheitseinrichtung 19 erhält von der zentralen Wagensteuerung 15 ein Freigabesignal 18, sobald der Zug 2 und damit der Wagen 3 zum Stehen gekommen ist und der Triebfahrzeugführer den Einstieg und Ausstieg freigegeben hat. Nur wenn die Sicherheitseinrichtung 19 das Freigabesignal 18 erhalten hat, so lässt es die Sicherheitseinrichtung 19 zu, dass das Funktionssteuersignal 17 zum Öffnen Tür 5 überhaupt erzeugt wird.

Darüber hinaus könnte es passieren, dass ein Objekt, beispielsweise ein Rucksack eines Passagiers, in das Detektionsvolumen gelangt, ohne dass ein Öffnen der Tür 5 gewollt wäre. In der gezeigten Variante wird eine solche unbeabsichtigte Öffnung der Tür 5 mithilfe einer Funktionssicherungseinrichtung 20 als Teil der Steuerung 8 vermieden.

Die Funktionssicherungseinrichtung 20 weist einen vorgegebenen zeitlichen Schwellenwert auf. Erst wenn die Anwesenheit einer Hand im Detektionsvolumen eine zeitliche Dauer aufweist, die gleich oder größer ist als der zeitliche Schwellenwert, so wird das Funktionssteuersignal 17 zum Öffnen der Tür 5 erzeugt und ausgegeben.

In der gezeigten Variante sind in das diffraktive Element 10 zwei verschiedene Gestaltungen von Elementen eingeschrieben. Zum einen die Gestaltung des Knopfes 13a als Bedienelement, zum anderen aber ein Verbotsschild als Symbol 13b (siehe Inset unten in Fig. 2) ohne die Möglichkeit zum Auslösen eines Betätigungssignals 16. Die beiden Hologramme 13a, 13b sind selektiv auswählbar sichtbar. Dabei erfolgt die Auswahl, welches Hologramm 13a, 13b angezeigt wird, in Abhängigkeit von der von der Strahlungsquelle 9 erzeugten und abgestrahlten elektromagnetischen Strahlung 12.

Um den Wellenlängenbereich der elektromagnetischen Strahlung 12 auszuwählen ist die Steuereinrichtung 8 mit der Strahlungsquelle 9 verbunden, wobei die Steuereinrichtung 8 ein Quellensteuersignal 21 an die Strahlungsquelle 9 überträgt. Dieses Quellensteuersignal 21 steuert die Strahlungsquelle 9 so, dass sie entweder den Knopf 13a oder aber das Verbotsschild 13b als dreidimensionale Darstellung generieren. Es versteht sich, dass die Steuereinrichtung 8 den Knopf 13a nur dann generieren lässt, wenn alle anderen Bedingungen für das Öffnen der Tür 5 erfüllt sind.

Passagiere sind es gewohnt, dass sie beim Drücken eines Knopfes zum Öffnen der Tür eines Zuges aufgrund der haptischen Erfahrung feststellen können, ob ihre Bewegung erfolgreich war oder nicht. Der Knopf hat eine Auslöseweg, den die Hand mit dem Knopf zusammen zurücklegt. Dieser Auslöseweg entfällt bei der holografischen Darstellung des Bedienelements 13a.

Um dem Benutzer dennoch auch eine haptische Rückmeldung zu geben, weist das System 1 in der Variante der Figuren eine Ultraschalleinrichtung 22 als Signalisierungseinrichtung auf. Die Ultraschalleinrichtung erzeugt als Reaktion auf die erfolgreiche Betätigung des Bedienelements 13a an der Hand des Passagiers lokalisiert einen mechanischen Reiz als Rückmeldung für die erfolgreiche Betätigung. Dazu ist die Steuereinrichtung 8 derart eingerichtet, dass sie als Reaktion auf das Betätigungssignal 16 ein Ultraschallsteuersignal 23 generiert und an die Ultraschalleinrichtung 22 ausgibt. Diese erzeugt wiederum als Reaktion auf das Ultraschallsteuersignal 23 die erwähnte Ultraschallwelle als haptisches Signal.

Für Zwecke der ursprünglichen Offenbarung wird darauf hingewiesen, dass sämtliche Merk-male, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich bei-spielhaft und ist nicht als Beschränkung des Schutzbereichs gedacht, so wie er durch die An-sprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: System
- 2: Zug
- 3: Eisenbahnwaggon
- 4: Wagenkasten
- 5: Tür
- 6: aufgedruckte Markierung
- 7: holografische Bedieneinrichtung
- 8: Steuereinrichtung (Rechner)
- 9: Strahlungsquelle
- 10: diffraktives Element
- 11: Sensoreinrichtung
- 12: elektromagnetische Strahlung
- 13: dreidimensionale holographische Darstellung
- 13a: Knopf
- 13b: Verbotsschild
- 14: Schnittstelle
- 15: zentrale Wagensteuerung
- 16: Betätigungssignal
- 17: Funktionssteuersignal
- 18: Freigabesignal
- 19: Sicherheitseinrichtung
- 20: Funktionssicherungseinrichtung
- 21: Quellensteuersignal
- 22: Ultraschalleinrichtung
- 23: Ultraschallsteuersignal

## Patentansprüche

1. System (1) mit
einem Wagenkasten (4) für ein Fahrzeug (2) des öffentlichen Personenverkehrs, einer holografischen Bedieneinrichtung (7), wobei die holografische Bedieneinrichtung (7) folgende Elemente aufweist:
- eine Strahlungsquelle (9) zum Erzeugen und Abstrahlen elektromagnetischer Strahlung (12),
- ein diffraktives Element (10),
wobei das diffraktive Element (10) derart ausgestaltet und angeordnet ist,
dass in dem Betrieb des Systems die elektromagnetische Strahlung (12) das diffraktive Element (10) beleuchtet und dass das diffraktive Element (10) in dem Betrieb des Systems (1) bei einer Beleuchtung mit der elektromagnetischen Strahlung (12) eine holographische Darstellung eines Bedienelements (13a) erzeugt, und
- eine Sensoreinrichtung (11),
wobei die Sensoreinrichtung (11) derart angeordnet und ausgestaltet ist, dass die Sensoreinrichtung (11) in dem Betrieb des Systems (1) eine Bewegung eines Objekts innerhalb eines die Darstellung des Bedienelements (13a) enthaltenden Detektionsvolumens berührungslos erfasst und bei dem Erfassen ein Betätigungssignal (16) erzeugt und ausgibt,
wobei die holographische Bedieneinrichtung (7) derart an oder in dem Wagenkasten (4) angeordnet ist, dass ein Objekt in oder vor dem Wagenkasten in das Detektionsvolumen bewegbar ist,
und einer Steuereinrichtung (8)
wobei die Steuereinrichtung (8) derart wirksam mit der Sensoreinrichtung (11) verbunden ist, dass die Steuerreinrichtung (8) in dem Betrieb des Systems (1) das Betätigungssignal von der Sensoreinrichtung (8) empfängt, und
wobei die Steuerreinrichtung (8) derart eingerichtet ist, dass die Steuereinrichtung (8) als Reaktion auf das Betätigungssignal (16) ein Funktionssteuersignal (17) erzeugt und ausgibt, wobei mit dem Funktionssteuersignal (17) eine Funktion des Fahrzeugs (2) auslösbar ist.

2. System (1) nach Anspruch 1, wobei das System (1) eine Signalisiereinrichtung (22) aufweist, wobei die Signalisiereinrichtung (22) derart eingerichtet und angeordnet ist, dass die Signalisiereinrichtung in dem Betrieb des Systems (1) ein für den Passagier, vorzugsweise berührungslos, sensorisch wahrnehmbares Signal erzeugt.

3. System (1) nach Anspruch 2, wobei das sensorisch wahrnehmbare Signal ein visuelles Signal, ein haptisches Signal oder ein thermisches Signal ist.

4. System (1) nach einem der Ansprüche 2 oder 3, wobei die Signalisiereinrichtung (22) derart eingerichtet und angeordnet ist, dass sie in dem Betrieb des Systems das sensorisch wahrnehmbare Signal in dem Detektionsvolumen erzeugt.

5. System (1) nach Anspruch 4, wobei die Signalisiereinrichtung eine Ultraschalleinrichtung (22) umfasst, wobei die Ultraschalleinrichtung (22) derart eingerichtet und angeordnet ist, dass die Ultraschalleinrichtung (22) in dem Betrieb des Systems (1), vorzugsweise in dem Detektionsvolumen, ein an oder von einem Körperteil des Passagiers wahrnehmbares haptisches Signal erzeugt.

6. System (1) nach Anspruch 5, wobei die Ultraschalleinrichtung (22) derart wirksam mit der Steuereinrichtung (8) verbunden ist, dass die Ultraschalleinrichtung (22) in dem Betrieb des Systems (1) ein Ultraschallsteuersignal (23) von der Steuereinrichtung (8) empfängt,
wobei die Steuereinrichtung (8) derart eingerichtet ist, dass die Steuereinrichtung (8) in dem Betrieb des Systems (1) als Reaktion auf das Betätigungssignal (16) das Ultraschallsteuersignal (23) erzeugt und an die Ultraschalleinrichtung (22) ausgibt, und
wobei die Ultraschalleinrichtung (22) derart eingerichtet und angeordnet ist, dass die Ultraschalleinrichtung (22) in dem Betrieb des Systems (1) als Reaktion auf das Ultraschallsteuersignal (23) das haptische Signal erzeugt.

7. System (1) nach einem der Ansprüche 1 bis 6, wobei die Strahlungsquelle (9) derart wirksam mit der Steuereinrichtung (8) verbunden ist, dass die Strahlungsquelle (9) in dem Betrieb des Systems (1) ein Quellensteuersignal (21) von der Steuereinrichtung (8) empfängt,
wobei die Strahlungsquelle (9) derart eingerichtet ist, dass sie in Abhängigkeit von dem Quellensteuersignal (21) auswählbar entweder die elektromagnetische Strahlung (12) in einem ersten Wellenlängenbereich erzeugt und abstrahlt oder die elektromagnetische Strahlung (12) in einem zweiten Wellenlängenbereich erzeugt und abstrahlt, und
wobei das diffraktive Element (10) derart ausgestaltet ist, dass es bei Beleuchtung mit der elektromagnetischen Strahlung (12) in dem ersten Wellenlängenbereich die holographische Darstellung des Bedienelements (13a) erzeugt und bei Beleuchtung mit der elektromagnetischen Strahlung (12) in dem zweiten Wellenlängenbereich eine holographische Darstellung eines zweiten Elements (13b) erzeugt, wobei das Bedienelement (13a) von dem zweiten Element (13b) verschieden ist.

8. System (1) nach einem der Ansprüche 1 bis 7, wobei die Strahlungsquelle (9) derart wirksam mit der Steuereinrichtung (8) verbunden ist, dass die Strahlungsquelle (9) in dem Betrieb des Systems (1) ein Quellensteuersignal (21) von der Steuereinrichtung (8) empfängt,
wobei die Strahlungsquelle (9) derart eingerichtet ist, dass sie in Abhängigkeit von dem Quellensteuersignal (21) auswählbar entweder die elektromagnetische Strahlung (12) in einem ersten Wellenlängenbereich erzeugt und abstrahlt oder die elektromagnetische Strahlung (12) in einem zweiten Wellenlängenbereich erzeugt und abstrahlt, und
wobei das diffraktive Element (10) derart ausgestaltet ist, dass es bei Beleuchtung mit der elektromagnetischen Strahlung (12) in dem ersten Wellenlängenbereich eine holographische Darstellung des Bedienelements (13a) an einer ersten Position erzeugt und bei Beleuchtung mit der elektromagnetischen Strahlung (12) in dem zweiten Wellenlängenbereich eine holographische Darstellung des Bedienelements (13a) an einer zweiten Position erzeugt, wobei die erste Position von der zweiten Position verschieden ist.

9. System (1) nach einem der Ansprüche 1 bis 8, wobei die Steuereinrichtung (8) eine Sicherheitseinrichtung (19) aufweist, wobei die Sicherheitseinrichtung (19) derart eingerichtet ist, dass die Sicherheitseinrichtung (19) in dem Betrieb des Systems (1) ein Erzeugen des Funktionssteuersignals (17) nur dann zulässt, wenn die Sicherheitseinrichtung (19) ein Freigabesignal (18) von einer Steuerung (15) des Fahrzeugs (2) empfangen hat.

10. System (1) nach einem der Ansprüche 1 bis 9, wobei das System (1) eine Funktionssicherungseinrichtung (20) aufweist, wobei die Funktionssicherungseinrichtung (20) derart eingerichtet ist, dass die Funktionssicherungseinrichtung (20) in dem Betrieb des Systems (1)
ein Maß dafür erfasst, ob dem Erzeugen des Betätigungssignals (16) eine bewusste Handlung eines Passagiers zugrunde liegt und
dann, wenn das Maß gleich oder größer ist als ein Schwellenwert, ein Funktionssicherungssignal erzeugt und ausgibt,
wobei die Steuereinrichtung (8) derart wirksam mit der Funktionssicherungseinrichtung (20) verbunden ist, dass die Steuerreinrichtung (8) in dem Betrieb des Systems (1) das Funktionssicherungssignal von der Funktionssicherungseinrichtung (20) empfängt, und
wobei die Steuereinrichtung (8) derart eingerichtet ist, dass die Steuereinrichtung (8) das Funktionssteuersignal (17) nur dann erzeugt und ausgibt, wenn sie das Funktionssicherungssignal empfangen hat.

11. System (1) nach Anspruch 10, wobei die Funktionssicherungseinrichtung (20) einen Bewegungssensor umfasst, wobei der Bewegungssensor derart ausgestaltet und angeordnet ist, dass er erfasst, ob die von der Sensoreinrichtung (11) erfasste Bewegung eine bewusste Bewegung eines Passagiers ist oder nicht.

12. System (1) nach einem der vorhergehenden Ansprüche, wobei das System (1) eine Projektionseinrichtung aufweist, wobei die Projektionseinrichtung derart eingerichtet und angeordnet ist, dass die Projektionseinrichtung in dem Betrieb des Systems (1) eine zweidimensionale graphische Darstellung auf eine Fläche in einer Umgebung der holografischen Darstellung des Bedienelements (13a) projiziert.

13. System (1) nach einem der vorhergehenden Ansprüche, wobei die Funktion des Fahrzeugs (2) ausgewählt ist aus einer Gruppe bestehend aus einer Türöffnung, einer Türschließung, einen Haltewunsch, einem Notruf, einem Aufbau einer Kommunikationsverbindung, einer Klimaanlage, einer Beleuchtung, einem Informationssystem und einem Service-Wunsch oder einer Kombination davon.

14. Fahrzeug (2) des öffentlichen Personenverkehrs mit einem System (1) nach einem der vorhergehenden Ansprüche.

15. Fahrzeug (2) nach dem vorhergehenden Anspruch, wobei das Fahrzeug (2) eine Tür (5) aufweist, wobei die Funktion, die das Funktionssteuersignal auslöst, eine Türöffnung oder Türschließung ist.
